# EUROPEAN PATENT APPLICATION

(11) **EP 4 443 666 A1**
(43) Date of publication of application: **09.10.2024**
(21) Application number: 24168970.2
(22) Date of filing: 08.04.2024
(51) Int. Cl.: H01R 13/516, H01R 13/6581

(54) **HIGH-CURRENT CONNECTOR FOR AN ELECTRIC VEHICLE**

(30) Priority: 06.04.2023 DE 102023108963
(71) Applicant: TE Connectivity Solutions GmbH, 8200 Schaffhausen (CH)
(72) Inventor: FERTIG, Jochen, 64625 BENSHEIM (DE); BULDUK, Uemit, 64625 BENSHEIM (DE); SPATARU, Florin, 64625 BENSHEIM (DE); BICHELS, Carsten, 73499 WOERT (DE)
(74) Representative: Patentanwaltskanzlei WILHELM & BECK

(57) **Abstract**

The invention relates to a high-current connector (10) for an electric vehicle, wherein the high-current connector (10) has a housing (15), a screen housing (35) and a high-current contact device (20), wherein the housing (15) surrounds a housing interior (25), in which the screen housing (35) is arranged, wherein the screen housing (35) delimits a screen housing interior (40), in which the high-current contact device (20) is arranged, wherein the screen housing (35) has a deep-drawn first screen housing shell (60) and a first catch spring (75) which extends away from the screen housing interior (40), wherein the first catch spring (75) is connected to the first screen housing shell (60) without gaps, wherein the housing (15) has a projection (195) at a side facing the housing interior (25), wherein the first catch spring (75) extends along a first axis (85) and the projection (195) is orientated in a manner inclined relative to the first axis (85), wherein the first catch spring (75) blocks with a first catch face (90) which is orientated in a manner inclined relative to the first axis (85) a movement of the screen housing (35) along the first axis (85) by the first catch face (90) striking the projection (195).

## Description

The invention relates to a high-current connector according to patent claim 1.

US 2021/0328386 A1 discloses a connector.

An object of the invention is to provide an improved high-current connector.

This object is achieved by means of a high-current connector according to patent claim 1. Advantageous embodiments are specified in the dependent claims.

It has been recognised that an improved high-current connector for an electric vehicle can be provided in that the high-current connector has a housing, a screen housing and a high-current contact device. The housing surrounds a housing interior, in which the screen housing is arranged. The screen housing delimits a screen housing interior, in which the high-current contact device is arranged. The screen housing has a deep-drawn first screen housing shell and a first catch spring which extends away from the screen housing interior. The first catch spring is preferably connected to the first screen housing shell without gaps. The housing has a projection at a side facing the housing interior. The first catch spring extends along a first axis. The projection is orientated in a manner inclined relative to the first axis. The first catch spring blocks with a first catch face which is orientated in a manner inclined relative to the first axis a movement of the screen housing along the first axis by the first catch face striking the projection.

This configuration has the advantage that, as a result of the deep-drawn configuration of the first screen housing shell, the first screen housing shell can be produced in a particularly simple and cost-effective manner by means of a deep-drawing method. Furthermore, the deep-drawn configuration ensures that, as a result of the connection of the first catch spring to the first screen housing shell, preferably without any gaps, the first catch spring does not have any antenna-like effect and a particularly good screening of the high-current contact device which is arranged in the screen housing interior is thereby ensured.

In another embodiment, the first screen housing shell has an outer contour, wherein the outer contour extends in a manner adjoining the first catch spring along the first axis, in particular parallel with the first axis. The first catch spring is arranged on the outer contour.

This configuration has the advantage that, as a result of the deep-drawn configuration of the first housing shell and the arrangement of the first catch spring on the outer contour, the catch spring is particularly flexible and the screen housing can thereby be inserted into the housing interior of the housing in a particularly effective manner.

In another embodiment, the first screen housing has a plate-like first housing portion. The first catch spring has a spring portion and a connecting portion, wherein the spring portion is configured in an obliquely inclined manner relative to the first housing portion and projects with the first catch face over the first housing portion at the side facing the housing. The connecting portion connects the spring portion to the first housing portion at a side facing the housing. The connecting portion is arranged in a manner inclined relative to the spring portion and the first housing portion. In this case, the connecting portion can particularly be orientated in a manner obliquely inclined or perpendicularly inclined relative to the spring portion and/or the first housing portion. In this case, the connecting portion prevents a gap between the spring portion and the first housing portion. Furthermore, the first screen housing shell can be deep-drawn in a particularly simple manner as a result of the connecting portion and, furthermore, a bottom die with which the first screen housing shell is deep-drawn together with the first catch spring can be formed in a particularly simple manner.

In this case, it is particularly advantageous if the connecting portion is orientated parallel with the outer contour.

In another embodiment, the connecting portion extends along the first axis and projects along the first axis above the spring portion on the first catch face. This configuration has the advantage that the EMC behaviour of the first housing shell is further improved.

In another embodiment, the first catch spring has a fixing portion, wherein the fixing portion is of plate-like form and is arranged in a common plane with the first housing portion. The spring portion is fixed at a fixed end to the fixing portion, wherein the spring portion is arranged in a manner obliquely inclined relative to the fixing portion. The fixing portion acts in this case as a connection of the fixed end with respect to the housing portion and extends the first catch spring along the axis. A deflection of the first catch spring in the direction of the screen housing in a direction perpendicular to the first axis can thereby be ensured.

For stiffening, the spring portion has an impression which is arranged with spacing from the connecting portion. The impression is further arranged with spacing between a fixed end of the spring portion and the first catch face. A rigidity of the first catch spring can thereby be increased.

In another embodiment, the first catch spring has a collar, wherein the collar is arranged at a free end of the spring portion. The collar is connected to the spring portion and arranged in an inclined manner relative to the spring portion. At a side of the collar facing away from the spring portion, the first catch face is arranged on the collar. This configuration has the advantage that a face, with which the first catch spring abuts the projection, is increased by the collar and thereby an undesirable introduction of the first catch spring into the projection or an undesirable deformation of the first catch spring on the first catch face can be avoided.

In another embodiment, the screen housing has a second screen housing shell and a catch device, wherein the catch device locks the first screen housing shell to the second screen housing shell along a second axis, wherein the second axis is orientated in a manner inclined relative to the first axis. This configuration has the advantage that the first screen housing shell and the second screen housing shell can both be produced in a deep-drawing method and, on the other hand, the two screen housing shells are connected to each other in a particularly good and simple manner.

In another embodiment, the catch device has a second catch spring and a first recess, wherein the second catch spring has a second catch face. The second catch face is orientated parallel with the first axis. The second catch spring engages in the first recess and the second catch face adjoins the first recess. This configuration has the advantage that the first and second screen housing shell can be connected to each other in a positive-locking manner.

An antenna effect of the first catch spring is further reduced if the first catch spring is connected to the first screen housing shell without gaps.

The invention is explained in more detail below with reference to Figures, in which:
- Figure 1: shows a perspective illustration of a high-current connector for an electric vehicle;
- Figure 2: shows a perspective illustration of the high-current connector shown in Figure 1;
- Figure 3: shows a perspective illustration of a cut-out of the screen housing, shown in Figure 2, of the high-current connector;
- Figure 4: shows a cut-out A marked in Figure 3 of the screen housing, which is shown in Figure 3, of the high-current connector;
- Figure 5: shows a sectioned view along a plane of section B-B, which is shown in Figure 1, through the housing of the high-current connector shown in Figure 1;
- Figure 6: shows a sectioned view along a plane of section C-C, which is shown in Figure 1, through the high-current connector;
- Figure 7: shows a side view of the high-current connector shown in Figure 1 with a partially sectioned housing;
- Figure 8: shows a sectioned view along a plane of section D-D, which is shown in Figure 1, through the high-current connector shown in Figure 1;
- Figure 9: shows a perspective illustration of a sectioned view along the plane of section D-D shown in Figure 1;
- Figure 10: shows a sectioned view along a plane of section E-E, which is shown in Figure 1, through the high-current connector;
- Figure 11: shows a sectioned view along a plane of section F-F, which is shown in Figure 1, through the high-current connector;
- Figure 12: shows a perspective illustration of a cut-out of the screen housing of a high-current connector according to a second embodiment; and
- Figure 13: shows a cut-out of a sectioned view along the plane of section D-D, which is shown in Figure 1, through the high-current connector which is shown in Figure 12.

In the following Figures, reference is made to a coordinate system for greater understanding. The coordinate system has an x axis (longitudinal direction), a y axis (transverse direction) and a z axis (vertical direction). In this case, for example, the coordinate system is in the form of a right-handed system.

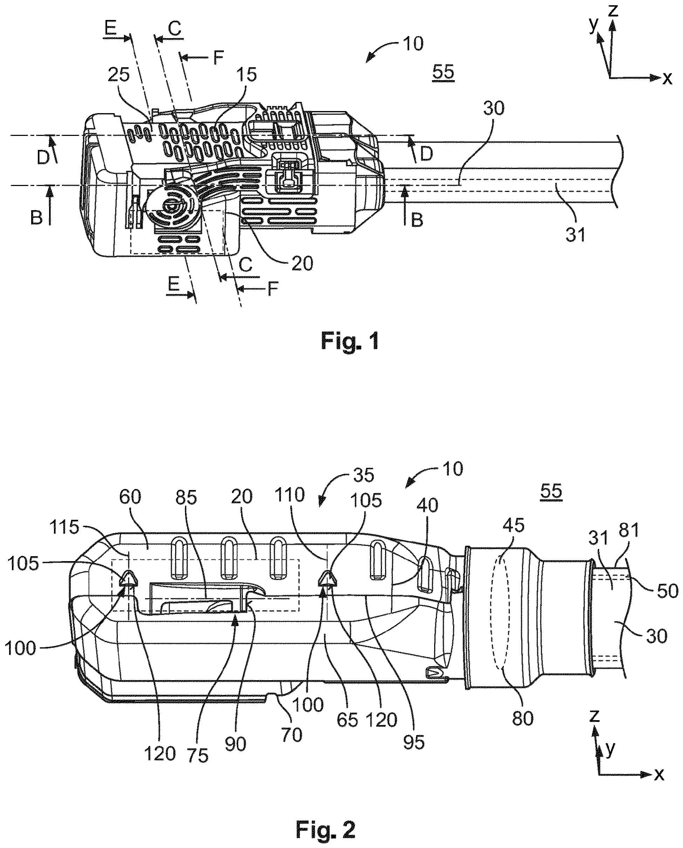

Figure 1 shows a perspective illustration of a high-current connector 10 for an electric vehicle.

The high-current connector 10 may be particularly in the form of a high-current module connector. In this case, the high-current connector 10 is configured for direct-current transmission, for example, in the context of an energy transmission to a drive system or in the context of a rapid-charging operation of the vehicle. In this case, for example, the high-current connector 10 may be arranged on a high-voltage battery or on a drive motor.

The high-current connector 10 has a housing 15 and at least one high-current contact device 20 (indicated in Figure 1 with broken lines). Naturally, the high-current connector 10 may have a plurality of high-current contact devices 20. In the embodiment, the high-current contact device 20 is electrically connected to a screened high-current cable 30. The high-current contact device 20 is arranged in a housing interior 25 of the housing 15. The high-current contact device 20 is electrically connected to an electrical conductor 31 of a high-current cable 30. The electrical high-current cable 30 is guided into the housing interior 25 and is in the form of a screened high-current cable. The electrical conductor 31 of the high-current cable 30 is used for electrical current transmission.

Figure 2 shows a perspective illustration of the high-current connector 10 which is shown in Figure 1.

In Figure 2, the illustration of the housing 15 is dispensed with for reasons of clarity.

The high-current connector 10 further has a screen housing 35. The screen housing 35 is arranged in the housing interior 25 of the housing 15. The screen housing 35 surrounds a screen housing interior 40, wherein the high-current contact device 20 is arranged in the screen housing interior 40. The screen housing 35 is electrically connected with a screen contacting 45 to the screening 50 of the high-current cable 30. For example, the housing 15 is produced from an electrically non-conductive first material while, on the other hand, the screen housing 35 is produced from a second electrically conductive material, in particular preferably from a pure copper material. The copper proportion of the second material is preferably at least 98%. The screen housing 35 screens the high-current contact device 20 electromagnetically against the surroundings 55 of the high-current connector 10.

The screen housing 35 has a first screen housing shell 60, a second screen housing shell 65 and a first catch spring 75. The first screen housing shell 60 and the second screen housing shell 65 are, for example, shell-like in form. In this case, the second screen housing shell 65 engages in the first screen housing shell 60 so that the screen housing interior 40 is advantageously surrounded. At the side facing away from the viewer, the screen housing 35 and the housing 15 have a first opening 70, in which a high-current mating connector which is associated with the high-current connector 10 engages in the screen housing interior 40 in order to contact the high-current contact device 20 in terms of electrical power.

Furthermore, the screen housing 35 has a second opening 80 (indicated with broken lines in Figure 2), wherein the electrical conductor 31 is guided through the second opening 80 together with a sheath 81 in the screen housing interior 40 and is electrically connected to the high-current contact device 20 in the screen housing interior 40. The second opening 80 is arranged offset in the longitudinal direction relative to the first opening 70.

The first catch spring 75 extends along a first axis 85. The first axis 85 is, by way of example, the main extent direction of the first catch spring 75. The first axis 85 can extend, for example, along the longitudinal axis (x axis).

At a side, facing the second opening 80, of the first catch spring 75, the first catch spring 75 has a first catch face 90. The first catch face 90 is preferably orientated in a manner inclined relative to the first axis 85. In particular, for example, the first catch face 90 can extend in a yz plane and can consequently be orientated, for example, perpendicularly to the first axis 85.

The first screen housing shell 60 has an outer contour 95 on an edge of the first screen housing shell 60. In the embodiment, the outer contour 95 is substantially formed so as to extend by way of example in an xz plane. The first catch spring 75 adjoins the outer contour 95 of the first screen housing shell 60 in the embodiment. In Figure 2, the outer contour 95 preferably extends at both sides along the first catch spring 75, in particular in a parallel manner, in particular in the first axis 85. In this case, the first catch spring 75 projects beyond the outer contour 95 of the first screen housing shell 60 in a transverse direction. In this case, the first catch spring 75 is formed on the first screen housing shell 60 without gaps.

As already mentioned above, the first screen housing shell 60 is deep-drawn. Naturally, the second screen housing shell 65 can also be deep-drawn from the second material. In this case, a material thickness of the first screen housing shell 60 and/or of the second screen housing shell 65 may be from 0.2 to 0.5 mm, in particular from 0.25 to 0.4 mm.

In the embodiment, the second screen housing shell 65 engages in the first screen housing shell 60 in the mounted state. Additionally, at the side facing the second opening 80, the first screen housing shell 60 and the second screen housing shell 65 are circumferentially surrounded by the screen contacting 45.

The first screen housing shell 60 is connected to the second screen housing shell 65 in a positive-locking manner, for example, by means of a catch device 100. Preferably, the catch device 100 comprises at least a second catch spring 105, preferably a plurality of second catch springs 105. Furthermore, the catch device 100 comprises at least a first recess 110. In this case, the number of first recesses 110 is accordingly identical to the number of second catch springs 105. The second catch spring 105 is arranged in the embodiment by way of example on the second screen housing shell 65. The second catch spring 105 extends along a second axis 115 which is preferably orientated in a manner inclined, in particular perpendicularly, to the first axis 85. The second catch spring 105 extends from the screen housing interior 40 outwardly in the direction of the housing 15. In the embodiment, for example, a plurality of second catch springs 105 and a plurality of correspondingly arranged first recesses 110 are provided and are arranged with spacing from each other. The second catch spring 105 may, for example, be pressed into the second screen housing shell 65 and may engage externally in the first recess 110 which is formed in the first screen housing shell 60. In this case, the second catch spring 105 has a second catch face 120 which is arranged at a side, facing the outer contour 95, of the second catch spring 105 and which blocks removal of the first screen housing shell 60 from the second screen housing shell 65 in a transverse direction by the first recess 110 striking the second catch face 120.

In the embodiment, for example, the first catch spring 75 is arranged between two first recesses 110 of the catch device 100.

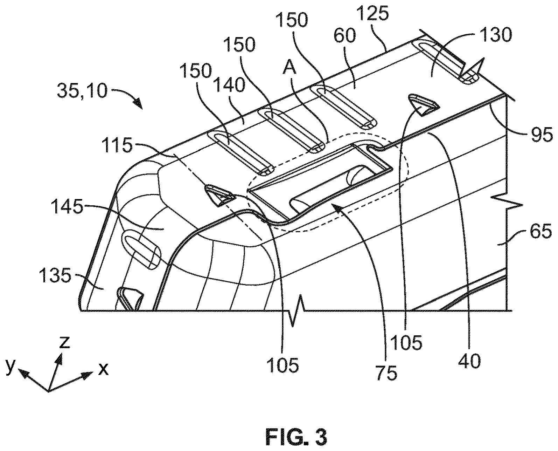

Figure 3 shows a perspective illustration of a cut-out of the screen housing 35 of the high-current connector 10 as shown in Figure 2.

The first screen housing shell 60 has at least one cover portion 125, a first housing portion 130 and a second housing portion 135. Additionally, the first screen housing shell 60 may further have additional housing portions which are concealed in Figure 3, however, in order to form the shell-like configuration of the first screen housing shell 60.

The cover portion 125 terminates the screen housing interior 40 in a transverse direction at a side facing away from the second screen housing shell 65. The second screen housing shell 65 is formed in an open state in this case at the side facing the cover portion 125. The first housing portion 130, the second housing portion 135 and the additional housing portions are integrally connected in a materially uniform manner to the cover portion 125 without gaps at one side. In this case, a first transition 140 between the cover portion 125 and the first housing portion 130 can be formed without gaps and preferably in a rounded manner. The first housing portion 130 extends, for example, substantially in an xy plane. At the transverse side facing away from the cover portion 125, the first housing portion 130 has the outer contour 95.

In a longitudinal direction, the second housing portion 135 adjoins both the cover portion 125 and the first housing portion 130. In this case, a second transition 145 between the cover portion 125 and the second housing portion 135 and between the second housing portion 135 and the first housing portion 130 can be formed without gaps and preferably in a rounded manner.

The second housing portion 135 closes the first screen housing shell 60 at the side facing away from the second opening 80. In this instance, the second housing portion 135 can be formed integrally and in a materially uniform manner with the cover portion 125 and the first housing portion 130.

The term "without gaps" is intended to be understood to mean that, particularly at the first transition 140 and/or the second transition 145, no additional openings, interruptions, slots or the like are provided, but instead the second material is formed at the first and/or second transition 140, 145 without any interruption. This is possible only when the first screen housing shell 60 is deep-drawn. Should the first screen housing shell 60 be press-bent, unlike the gapless configuration shown in Figure 3, a slot has to be provided, in particular at the first and/or second transition 140, 145, in order to bend the housing portion 130, 135 relative to the cover portion 125.

Furthermore, Figure 3 also clearly shows the gapless formation of the first catch spring 75 on the first housing portion 130. Furthermore, the first catch spring 75 itself is formed in a gapless manner so that no additional slots are provided between the first housing portion 130 and the first catch spring 75. Conversely, the first housing portion 130 and the first catch spring 75 merge into each other without interruptions so that gaps, openings, slots or the like between the first screen housing shell 60, in particular the first housing portion 130, and the first catch spring 75 are also dispensed with. In particular, the first screen housing shell 60 together with the first catch spring 75 can thereby be produced both integrally and in a materially uniform manner and by deep-drawing from the first material.

In a state spaced apart from the first catch spring 75 in a transverse direction, for example, the first screen housing shell 60 has at least one deep-drawn reinforcement rib 150 which extends along the second axis 115. In this case, the reinforcement rib 150 may be in the form of an impression which extends in the direction of the screen housing interior 40.

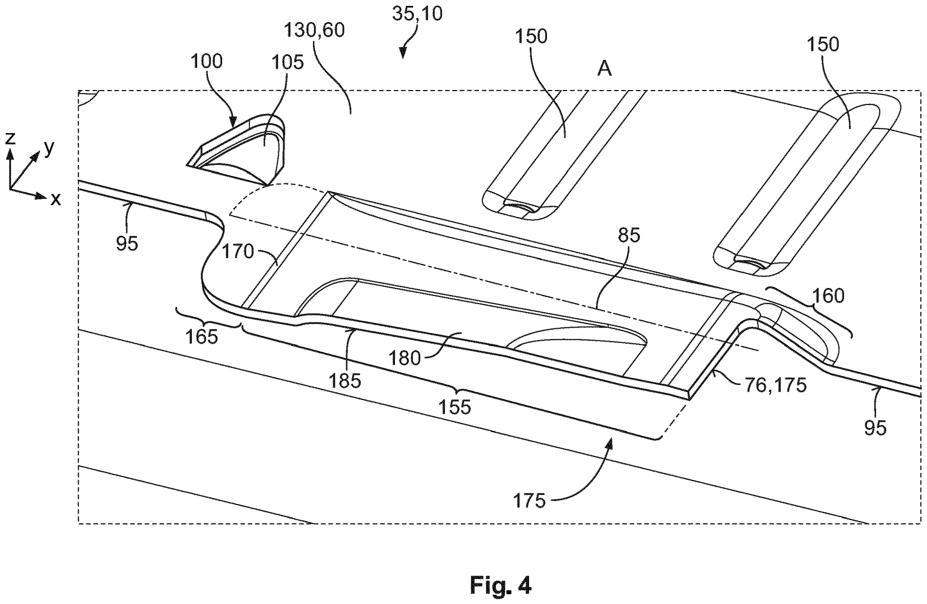

Figure 4 shows a cut-out A, which is marked in Figure 3, of the screen housing 35 of the high-current connector 10 as shown in Figure 3.

The first catch spring 75 has a spring portion 155, a connecting portion 160 and a fixing portion 165. The fixing portion 165 is in the form of a plate and is arranged with the first housing portion 130 of the first screen housing shell 60 in a common plane which is in the form, for example, of an xy plane. In this case, the fixing portion 165 adjoins the outer contour 95 at a first longitudinal side of the first catch spring 75. The fixing portion 165 is arranged, for example, at a side, facing away from the second opening 80, of the first catch spring 75.

The spring portion 155 extends between a first fixed end 170 and a first free end 175 along the first axis 85. The first axis 85 may be orientated, for example, parallel with the x axis. In the embodiment, the first axis 85 is the main extent direction of the first catch spring 75. In this case, the "main extent direction" is intended to mean the direction in which the first catch spring 75 has the longest extent. At the fixed end 170, the spring portion 155 is connected to the fixing portion 165. In this case, the fixed end 170 is arranged in a common plane with the first housing portion 130.

The spring portion 155 is arranged in a manner obliquely inclined relative to the fixing portion 165 and the first housing portion 130. In the embodiment, the spring portion 155 projects away from the screen housing interior 40 in the direction of the housing 15. In this case, the first catch face 90 which is orientated in the embodiment in an inclined manner, particularly perpendicularly, relative to the first axis 85, is arranged at the free end 175.

At the transverse side, facing the first housing portion 130, of the spring portion 155, the connecting portion 160 adjoins. The connecting portion 160 is preferably arranged in an obliquely inclined manner both relative to the first housing portion 130 and relative to the spring portion 155. The connecting portion 160 directly connects the spring portion 155 at the transverse side of the spring portion 155 to the first housing portion 130. The connecting portion 160 extends in a longitudinal direction between the fixed end 170 and the free end 175 and completely connects the spring portion 155 to the first housing portion 130 at the longitudinal side. At the free end 175, the connecting portion 160 can be further drawn in a longitudinal direction so that in the longitudinal direction the connecting portion 160 projects beyond the spring portion 155 at the free end 175.

As a result of the connecting portion 160, the spring portion 155 is connected to the first housing portion 130 without gaps. In particular, as a result of the connecting portion 160, the spring portion 155 and the fixing portion 165 can be produced by deep-drawing together with the first housing portion 130.

The connecting portion 160 can in this case be substantially in the form of a plate. In a side view, the connecting portion 160 is configured in a triangular manner in this case.

In order to reinforce the spring portion 155, an impression 180 may be arranged in the spring portion 155. The impression 180 is arranged, for example, with spacing in a transverse direction from the connecting portion 160. The impression 180 extends substantially along the first axis 85. In a longitudinal direction, for example, the impression 180 is arranged with spacing both from the free end 175 and from the fixed end 170. In this case, the impression 180 can extend as far as an outer edge 176 of the spring portion 155 which extends at a transverse side, which faces away from the first housing portion 130, of the spring portion 155. The impression 180 extends, for example, away from the screen housing interior 40 in the direction of the housing 15.

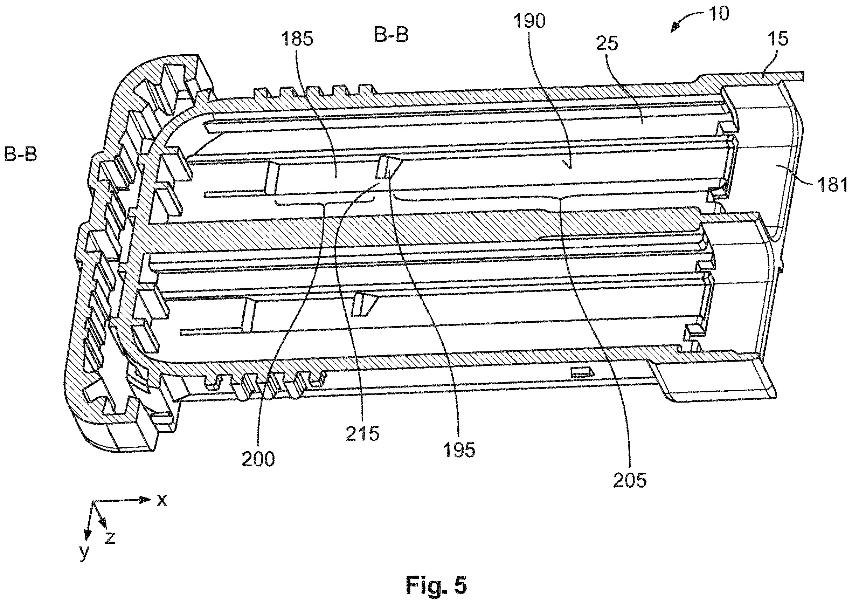

Figure 5 shows a sectioned view along a plane of section B-B which is shown in Figure 1 through the housing 15 of the high-current connector 10 which is shown in Figure 1.

The housing 15 has a housing opening 181. The high-current cable 30 (not illustrated in Figure 5) is guided in the housing interior 25 via the housing opening 181. The screen contacting 45 may be arranged on the housing opening 181. In the embodiment, for example, the housing 15 has a plurality of housing interiors 25 which are arranged beside each other with spacing in a transverse direction. The housing interiors 25 may also be referred to as housing chambers. The screen housing 35 and the high-current contact device 20 are arranged in each of the housing interiors 25. At the side facing the housing interior 25, the housing 15 has a second recess 185. The second recess 185 is, for example, in the form of a groove and extends in a longitudinal direction as far as the housing opening 181. The second recess 185 has a recess base 190 which extends substantially in an xy plane, by way of example. A projection 195 is arranged in the second recess 185 on the recess base 190. The projection 195 projects in a z direction beyond the recess base 190 in a direction facing the screen housing 35. The projection 195 extends substantially in a transverse direction and can have, substantially as the height, a depth of the second recess 185. The projection 195 subdivides the second recess 185 into a catch receiving member 200 and an introduction receiving member 205 which faces the catch receiving member 200. The introduction receiving member 205 extends in a longitudinal direction between the housing opening 181 and the projection 195. The catch receiving member 200 adjoins the projection 195 in a longitudinal direction at a side which faces away from the housing opening 181. In this case, approximately in the longitudinal direction, the catch receiving member 200 may have approximately an extent in the longitudinal direction along the first axis 85 of the first catch spring 75.

In a transverse direction, the second recess 185 substantially has the extent of the first catch spring 75. The projection 195 may, for example, be configured to be narrower than a width of the second recess 185. The projection 195 directly adjoins at one side a first lateral recess face. In this case, a gap 215 in the second recess 185 is formed between the projection 195 and a second lateral recess face 210 which is arranged opposite the first lateral recess face.

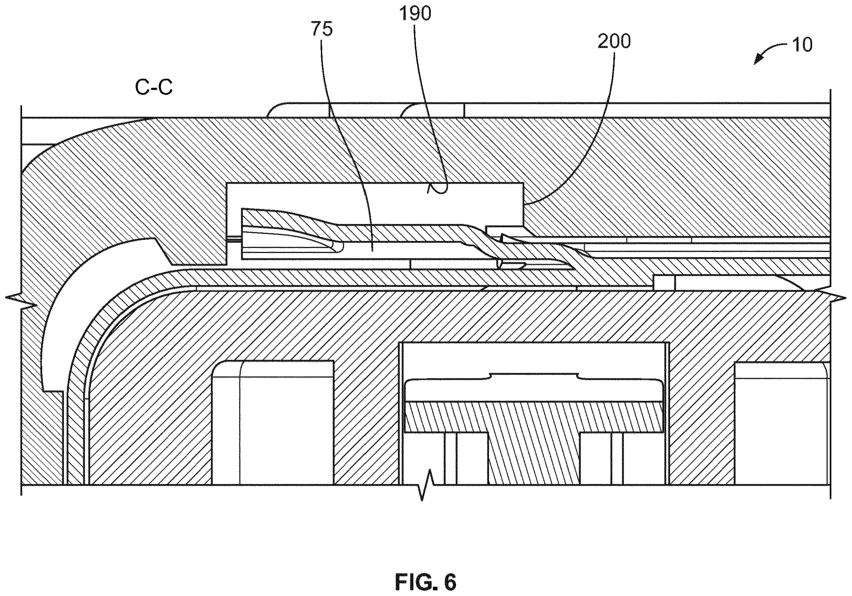

Figure 6 shows a sectioned view along a plane of section C-C which is shown in Figure 1 through the high-current connector 10.

In the mounted state of the high-current connector 10, the first catch spring 75 engages in the catch receiving member 200 and locks the screen housing 35 and the high-current contact device 20 which is arranged in the screen housing 35 in the housing 15 in the longitudinal direction. In this case, a tension relief in a longitudinal direction from the high-current cable 30 on the housing 15 can be ensured via the first catch spring 75.

In this case, in Figure 6, the first catch spring 75 is pivoted completely outwards.

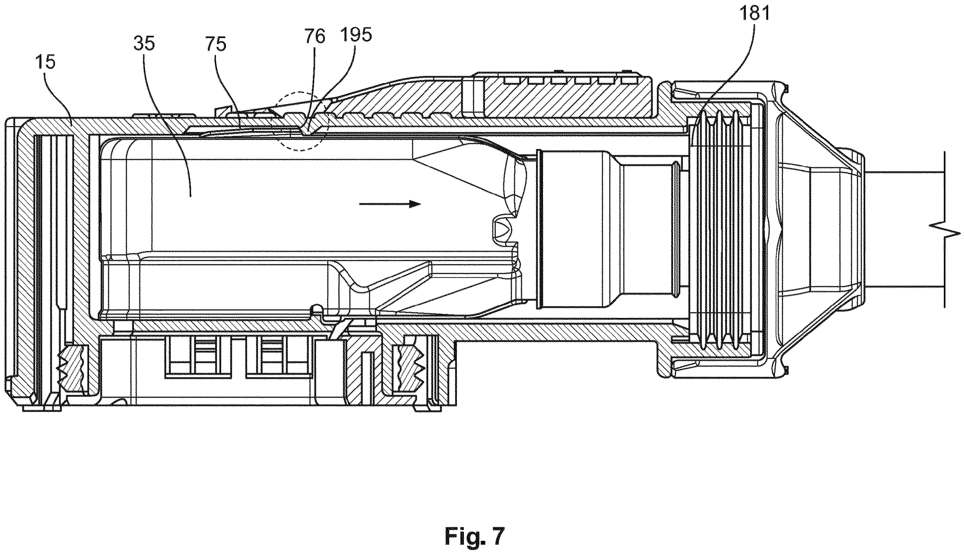

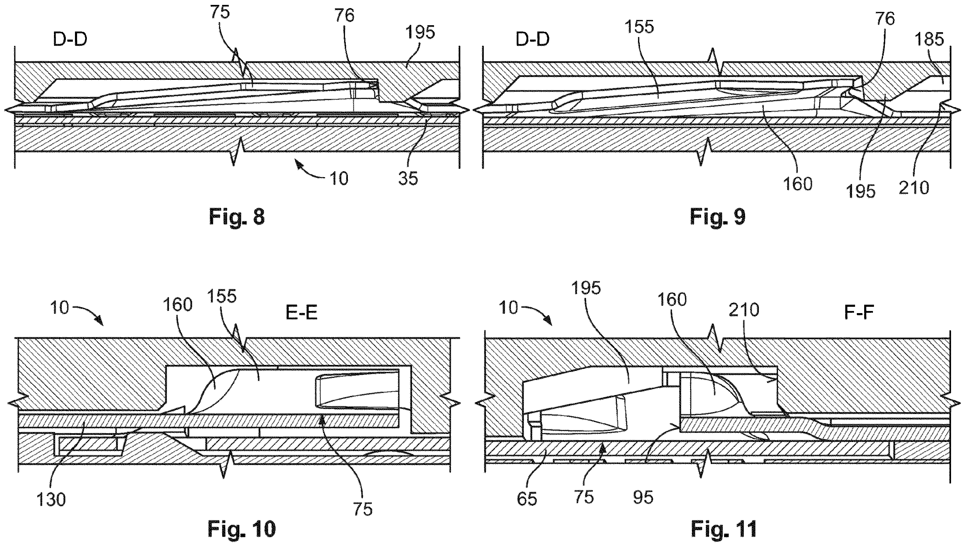

Figure 7 shows a side view of the high-current connector 10, which is shown in Figure 1, with a partially sectioned housing 15. Figure 8 shows a sectioned view along a plane of section D-D, which is shown in Figure 1, through the high-current connector 10 which is shown in Figure 1.

In the mounted state, the first catch face 90 of the first catch spring 75 faces the projection 195. In this case, the projection 195 may be in the form of a catch projection. Undesirable removal of the screen housing 35 in a longitudinal direction is blocked by the first catch face 90 abutting against the projection 195.

During the assembly of the high-current connector 10, the screen housing 35 is pre-assembled with the high-current contact device 20 and the high-current cable 30. The preassembled unit comprising the high-current contact device 20, the high-current cable 30 and the screen housing 35 is pushed into the housing interior 25 of the housing 15 in a longitudinal direction via the housing opening 181. In this case, the first catch spring 75 is guided along the second recess 185 by the housing 15. At the projection 195, the first catch spring 75 is pressed by the projection 195 in the direction of the screen housing interior 40. As a result of the deep-drawn configuration of the first screen housing shell 60 and the integral and materially uniform configuration of the first screen housing shell 60 with the first catch spring 75, at least the first catch spring 75 pivots in the direction of the screen housing interior 40 and is resiliently deformed in this case. In this case, the spring portion 155 slides on the projection 195 during the movement of the screen housing 35. If the first catch spring 75 is located substantially completely in the catch receiving member 200, the first catch spring 75 pivots in an outward direction in the direction of the housing 15 so that the first catch spring 75 engages in the catch receiving member 200.

Figure 9 shows a perspective illustration of a sectioned view along the plane of section D-D shown in Figure 1.

As already explained in the context of Figure 4, the connecting portion 160 is configured to be longer in the longitudinal direction than the spring portion 155 and the connecting portion 160 projects beyond the first catch face 90 in a longitudinal direction. In this case, the connecting portion 160 extends in the mounted state in a transverse direction between the projection 195 and the lateral recess face 210 into the gap 215.

Figure 10 shows a sectioned view along a plane of section E-E which is shown in Figure 1 through the high-current connector 10.

As a result of the integral and materially uniform and deep-drawn configuration of the first catch spring 75, the connecting portion 160 is arranged in a manner obliquely inclined relative to the first housing portion 130 and the spring portion 155. In this case, a third transition between the connecting portion 160 which has, for example, a plate-like basic shape, and the first housing portion 130 can be formed in a rounded manner. Similarly, a fourth transition between the connecting portion 160 and the spring portion 155 can be formed in a rounded manner.

Figure 11 shows a sectioned view along a plane of section F-F which is shown in Figure 1 through the high-current connector 10.

In the region of the engagement between the projection 195 and the lateral face 210, the connecting portion 160 can also be configured in a rounded manner.

In this case, it should also clearly be noted that the first catch spring 75 is arranged in an overlapping region relative to the second screen housing shell 65 so that undesirable opening of the second screen housing shell 65 can be avoided. An improved electromagnetic performance and an improved screening behaviour of the screen housing 35 can thereby be ensured.

As a result of the deep-drawn configuration of the first and second screen housing shells 60, 65, particularly in connection with the first catch spring 75, a geometric stable configuration of the screen housing 35 can also be ensured despite using soft materials, in particular copper/HCP materials. Furthermore, the configuration of the screen housing shells 60, 65 with the deep-drawing method ensures that undesirable slots or openings in the screen housing 35 are avoided. A particularly good screening behaviour of the screen housing 35 is thereby ensured with regard to the high-current contact device 20 with respect to the surroundings 55. Furthermore, the screen housing 35 is particularly stable in terms of geometry and vibrations. Furthermore, a situation is avoided in which individual projecting portions act as antennae and thereby reduce the electromagnetic performance.

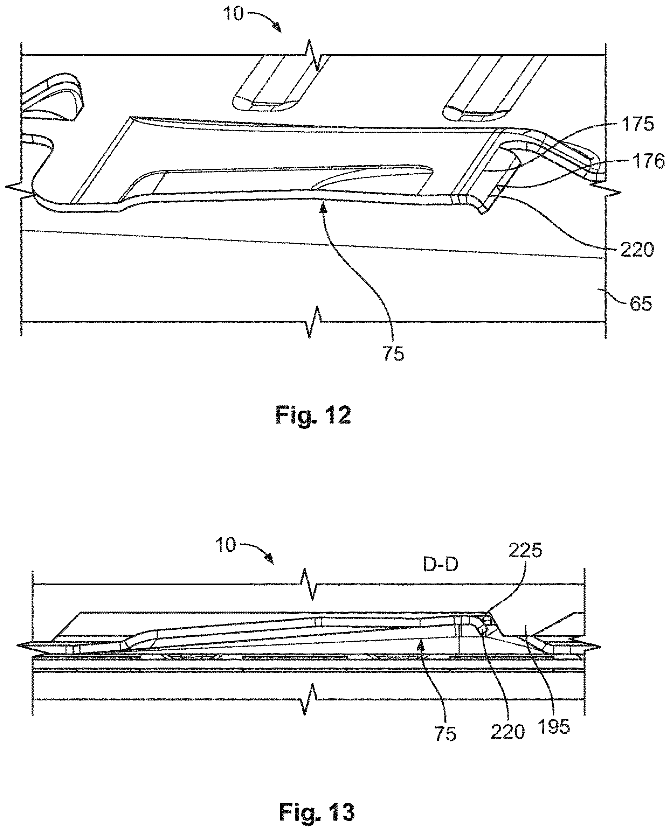

Figure 12 shows a perspective illustration of a cut-out of the screen housing 35 of a high-current connector 10 according to a second embodiment.

The high-current connector 10 is configured in a substantially identical manner to the high-current connector 10 which was explained in Figures 1 to 11. Below, exclusively the differences of the high-current connector 10 shown in Figure 12 in comparison with the high-current connector 10 shown in Figures 1 to 11 are discussed.

Additionally, the first catch spring 75 has a collar 220 at the free end 175. The collar 220 is angled in the direction of the side facing the second screen housing shell 65. At the side facing the second opening 80, for example, the first catch face 90 is arranged on the collar 220.

Figure 13 shows a cut-out of a sectioned view along the plane of section D-D which is shown in Figure 1 through the high-current connector 10 which is shown in Figure 12.

The collar 220 is orientated in such a manner that the first catch face 90 which is arranged on the collar 220 is orientated parallel with a stop surface 225 which is arranged on the projection 195 at a longitudinal side facing the first catch spring 75. This configuration has the advantage that a particularly good force transmission between the first catch spring 75 and the projection 195 is ensured.

### List of reference signs

- 10: High-current connector
- 15: Housing
- 20: High-current contact device
- 25: Housing interior
- 30: High-current cable
- 31: Electrical conductor
- 35: Screen housing
- 40: Screen housing interior
- 45: Screen contacting
- 50: Screen
- 55: Surroundings
- 60: First screen housing shell
- 65: Second screen housing shell
- 70: First opening
- 75: First catch spring
- 80: Second opening
- 81: Sheath
- 85: First axis
- 90: First catch face
- 95: Outer contour
- 100: Catch device
- 105: Second catch spring
- 110: First recess
- 115: Second axis
- 120: Second catch face
- 125: Cover portion
- 130: First housing portion
- 135: Second housing portion
- 140: First transition
- 145: Second transition
- 150: Reinforcing rib
- 155: Spring portion
- 160: Connecting portion
- 165: Fixing portion
- 170: Fixed end
- 175: Free end
- 176: Outer edge
- 180: Impression
- 181: Housing opening
- 185: Second recess
- 190: Recess base
- 195: Projection
- 200: Catch receiving member
- 205: Introduction receiving member
- 210: Lateral recess face
- 215: Gap
- 220: Collar
- 225: Stop surface

## Claims

1. High-current connector (10) for an electric vehicle,
- wherein the high-current connector (10) has a housing (15), a screen housing (35) and a high-current contact device (20),
- wherein the housing (15) surrounds a housing interior (25), in which the screen housing (35) is arranged,
- wherein the screen housing (35) delimits a screen housing interior (40), in which the high-current contact device (20) is arranged,
- wherein the screen housing (35) has a deep-drawn first screen housing shell (60) and a first catch spring (75) which extends away from the screen housing interior (40),
- wherein the first catch spring (75) is connected to the first screen housing shell (60),
- wherein the housing (15) has a projection (195) at a side facing the housing interior (25),
- wherein the first catch spring (75) extends along a first axis (85) and the projection (195) is orientated in a manner inclined relative to the first axis (85),
- wherein the first catch spring (75) blocks with a first catch face (90) which is orientated in a manner inclined relative to the first axis (85) a movement of the screen housing (35) along the first axis (85) by the first catch face (90) striking the projection (195).

2. High-current connector (10) according to Claim 1,
- wherein the first screen housing shell (60) has an outer contour (95),
- wherein the outer contour (95) extends in a manner adjoining the first catch spring (75) along the first axis (85), in particular parallel with the first axis (85),
- wherein the first catch spring (75) is arranged on the outer contour (95).

3. High-current connector (10) according to either of the preceding claims,
- wherein the first screen housing (60) has a plate-like first housing portion (130),
- wherein the first catch spring (75) has a spring portion (155) and a connecting portion (160),
- wherein the spring portion (155) is configured in an obliquely inclined manner relative to the first housing portion (130) and projects with the first catch face (90) over the first housing portion (130) at the side facing the housing (15),
- wherein the connecting portion (160) connects the spring portion (155) to the first housing portion (130) at a side facing the housing (15),
- wherein the connecting portion (160) is arranged in a manner inclined relative to the spring portion (155) and the first housing portion (130).

4. High-current connector (10) according to Claim 3,
- wherein the connecting portion (160) is orientated parallel with the outer contour (95).

5. High-current connector (10) according to Claim 3 or 4,
- wherein the connecting portion (160) extends along the first axis (85) and projects along the first axis (85) above the spring portion (155) on the first catch face (90).

6. High-current connector (10) according to any one of Claims 3 to 5,
- wherein the first catch spring (75) has a fixing portion (165),
- wherein the fixing portion (165) is of plate-like form, and is arranged in a common plane with the first housing portion (130),
- wherein the spring portion (155) is fixed at a fixed end (170) to the fixing portion (165),
- wherein the spring portion (155) is arranged in a manner obliquely inclined relative to the fixing portion (165).

7. High-current connector (10) according to any one of Claims 4 to 6,
- wherein the spring portion (155) has an impression (180) which is arranged with spacing from the connecting portion (160),
- wherein the impression (180) is arranged with spacing between a fixed end (170) of the spring portion (155) and the first catch face (90).

8. High-current connector (10) according to any one of Claims 4 to 7,
- wherein the first catch spring (75) has a collar (220),
- wherein the collar (220) is arranged at a free end (175) of the spring portion (155),
- wherein the collar (220) is connected to the spring portion (155) and is arranged in an inclined manner relative to the spring portion (155),
- wherein, at a side of the collar (220) facing away from the spring portion (155), the first catch face (90) is arranged on the collar (220).

9. High-current connector (10) according to either of the preceding claims,
- wherein the screen housing (35) has a second screen housing shell (65) and a catch device (100),
- wherein the catch device (100) locks the first screen housing shell (60) to the second screen housing shell (65) along a second axis (115),
- wherein the second axis (115) is orientated in a manner inclined relative to the first axis (85).

10. High-current connector (10) according to Claim 9,
- wherein the catch device (100) has a second catch spring (105) and a first recess (110),
- wherein the second catch spring (105) has a second catch face (120),
- wherein the second catch face (120) is orientated parallel with the first axis (85),
- wherein the second catch spring (105) engages in the first recess (110) and the second catch face (120) adjoins the first recess (110).

11. High-current connector (10) according to either of the preceding claims,
- wherein the first catch spring (75) is connected to the first screen housing shell (60) without gaps.
